# EUROPÄISCHE PATENTSCHRIFT

(11) **EP 3 233 573 B1**
(45) Veröffentlichungstag und Bekanntmachung des Hinweises auf die Patenterteilung: **09.01.2019**
(21) Anmeldenummer: 15797638.2
(22) Anmeldetag: 16.11.2015
(51) Int. Cl.: B60R 7/06, B60R 11/02

(54) **ANORDNUNG ZUM FREIGEBEN UND SCHLIESSEN EINER ÖFFNUNG IN EINEM INNENAUSSTATTUNGSTEIL EINES FAHRZEUGS**
ARRANGEMENT FOR OPENING AND CLOSING AN OPENING IN AN INTERIOR TRIM PIECE OF A VEHICLE
ENSEMBLE SERVANT À DÉGAGER ET À FERMER UNE OUVERTURE DANS UNE PARTIE D'ÉQUIPEMENT INTÉRIEUR D'UN VÉHICULE

(30) Priorität: 19.12.2014 DE 102014226599
(43) Veröffentlichungstag der Anmeldung: 25.10.2017
(73) Patentinhaber: Volkswagen Aktiengesellschaft, 38440 Wolfsburg (DE)
(72) Erfinder: SCHÄLLERT, Christoph, 38376 Süpplingenburg (DE)
(86) Internationale Anmeldenummer: PCT/EP2015/076679
(87) Internationale Veröffentlichungsnummer: WO 2016/096274

(56) Entgegenhaltungen:
- DE-A1-102011 109 056
- DE-U1- 20 015 730
- JP-A- 2005 153 806
- JP-A- 2005 335 582
- JP-A- 2007 261 300
- JP-A- 2007 261 378
- US-A1- 2009 146 444

## Beschreibung

Die Erfindung betrifft eine Anordnung zum Freigeben und Schließen einer Öffnung in einem Innenausstattungsteil eines Fahrzeugs, insbesondere Kraftfahrzeugs, nach dem Oberbegriff des Patentanspruchs 1 der Erfindung oder nach dem Oberbegriff des Patentanspruchs 3 der Erfindung.

Für die Zwecke der vorliegenden Beschreibung soll die übliche Fahrtrichtung eines Fahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 198 04 743 A1 sind Aufstellmechanismen für eine in einer Instrumententafel angeordnete Fahrzeuganzeigevorrichtung, wie ein Navigationssystem, ein Fernsehgerät oder dergleichen bekannt. So ist gemäß einer ersten Ausführungsform die Anzeigevorrichtung mittels einenends angeordneter Stifte in sogenannten Nockenrillen eines die Anzeigevorrichtung aufnehmenden Gehäuses verschiebbar geführt. Wenn die Stifte längs der Nockenrillen hin und her bewegt werden, kann die Anzeigevorrichtung zwischen einem liegenden und einem stehenden bzw. aufgestellten Zustand verschoben werden, wobei im aufgestellten Zustand eine Öffnung im Gehäuse durchdrungen wird, die mittels eines schwenkbaren Deckels verschließbar ist. Der Deckel wird während des Öffnungsvorganges mittels der Anzeigevorrichtung geöffnet. Die Stifte sollen mit einem Motor über einen Zahnstangenmechanismus gekoppelt sein. Eine Drehbewegung des Motors soll durch den Zahnstangenmechanismus in eine geradlinige Hin- und Herbewegung umgesetzt werden, so dass die Stifte gleiten können. Wie der Zahnstangenmechanismus im Detail ausgebildet ist, darüber schweigt sich diese Druckschrift aus. Gemäß einer zweiten Ausführungsform der Anzeigevorrichtung ist vorgesehen, dass die Anzeigevorrichtung ebenfalls mittels einenends angeordneter Stifte in Nockenrillen verschiebbar geführt ist und so hoch- oder heruntergeklappt werden kann. Dabei sind auf der Bodenfläche eines die Anzeigevorrichtung aufnehmenden Gehäuses eine rechte und eine linke Zahnstange vorgesehen, auf denen ein Block mittels eines linken und rechten Zahnrades motorbetrieben längs der Zahnstangen bewegt werden kann. Im Block ist der besagte Motor angeordnet. Die Stifte der Anzeigevorrichtung sind sowohl in Nockenrillen des Blocks als auch in Nockenrillen des Gehäuses derart geführt, dass infolge einer Bewegung des Blocks und unter Zuhilfenahme von Verbindungsgliedern die Anzeigevorrichtung aufgestellt oder abgelegt wird.

Die DE 102 20 180 A1 beschreibt eine eine Öffnung in einem Fahrzeug freigebende und schließende Abdeckeinheit für eine in Kopfhöhe ablesbare Anzeigevorrichtung, wobei die Öffnung die Strahlen eines aus einer Anzeigevorrichtung gesandten Bildes zu einem Bildschirm, beispielsweise zur Windschutzscheibe des Fahrzeugs gelangen lässt. Die Abdeckeinheit umfasst eine Abschirmplatte, um den geometrischen Strahlengang von der Anzeigevorrichtung zum Bildschirm bzw. zur Windschutzscheibe zu unterbrechen oder freizugeben. Die Abschirmplatte lässt sich mittels eines motorbetriebenen Schwenk- und/oder Hebelmechanismus zwischen einer stehenden und einer liegenden Stellung bewegen.

Die JP 2007 261300 A offenbart eine Anordnung zum Freigeben und Schließen einer in einer Deckfläche eines Innenausstattungsteils eines Fahrzeugs vorgesehenen Öffnung mittels eines verschiebbaren Abdeckelements. Das Abdeckelement ist nach Art einer Kette mit Kettengliedern durch eine Vielzahl untereinander gelenkig verbundener und in seitlichen Führungen des Innenausstattungsteils geführter Einzel-Abdeckelemente gebildet. Jedes Einzel-Abdeckelement weist eine geradlinig verlaufende Zahnstange auf. Die Vielzahl Zahnstangen sind in Reihe angeordnet und ebenfalls untereinander gelenkig verbunden. Die Verschiebebewegung des aus einer Vielzahl Einzel-Abdeckelementen bestehenden Abdeckelements in axialer Richtung der Zahnstangen wird mittels eines angetriebenen Zahnrades bewirkt, welches mit fortschreitender Bewegung nacheinander mit den Zahnstangen kämmt. Abschnittsweise werden die Einzel-Abdeckelemente samt zugeordneter Zahnstange auf einer durch die seitlichen Führungen bestimmten Kurve geführt.

Die JP 2005 335582 A offenbart einen Konsolenkasten mit einem verschiebbaren Deckelkörper, welcher eine Zahnstange aufweist, die mit einem angetriebenen Zahnrad im Eingriff steht. Die Zahnstange kann geradlinig oder gekrümmt ausgebildet sein.

Die DE 10 2011 109 056 A1 beschreibt eine Anordnung einer Halterung für ein Mobilgerät im Innenraum eines Fahrzeugs mit einer Ausfahreinrichtung zur translatorischen Bewegung der Halterung von einer Ruhestellung in eine Betriebsstellung und zurück. Die Bewegung wird mittels einer geradlinig verlaufenden Zahnstange der Halterung bewirkt, welche Zahnstange mit einem Zahnrad kämmt.

Aufgabe der Erfindung ist es, eine im Hinblick auf den Stand der Technik alternative Anordnung zum Freigeben und Schließen einer Öffnung in einem Innenausstattungsteil eines Fahrzeugs zu schaffen, welche einfach und kostengünstig ist.

Ausgehend von einer Anordnung zum Freigeben und Schließen einer in einer Deckfläche eines Innenausstattungsteils eines Fahrzeugs, insbesondere Kraftfahrzeugs, vorgesehenen Öffnung mittels eines verstellbaren Abdeckelements, wobei das Abdeckelement durch ein Flächenelement mit einer Oberseite und einer Unterseite gebildet und von einer Geschlossenstellung, in welcher das Abdeckelement die besagte Öffnung einnimmt, in eine Offenstellung, in welcher das Abdeckelement durch Verstellung desselben die Öffnung freigibt, und zurück überführbar ist, wobei das Abdeckelement an seiner Unterseite eine sich etwa mittig des Abdeckelements erstreckende, in Verstellrichtung des Abdeckelements weisende Zahnstange aufweist, die ihrerseits mit einem zugeordneten Zahnrad kämmt, wobei das Zahnrad unter Vermittlung einer drehangetriebenen und mit dem Zahnrad drehfest verbundenen Welle an einem mit dem Innenausstattungsteil verbundenen Rahmenelement drehgelagert ist, und wobei das Abdeckelement infolge einer Drehbewegung des mit der Zahnstange kämmenden Zahnrades relativ zum Rahmenelement und demgemäß relativ zur Öffnung verstellbar ist, wird die gestellte Aufgabe dadurch gelöst, dass die Zahnstange eine derartige, auf dem Zahnrad abwälzende Wälzkontur aufweist, dass während des Freigebens der Öffnung das Abdeckelement unter die die Öffnung begrenzende Deckfläche des Innenausstattungsteils taucht, und dass die Wälzkontur der Zahnstange entweder
a) durch einen ersten, geraden Zahnstangenabschnitt gebildet ist, der in einen zweiten, gekrümmten und durch einen Sektor eines innenverzahnten Stirnrades gebildeten Zahnstangenabschnitt übergeht, oder
b) durch einen ersten, gekrümmten und durch einen Sektor eines innenverzahnten Stirnrades gebildeten Zahnstangenabschnitt gebildet ist, der in einen zweiten, gekrümmten und durch einen Sektor eines innenverzahnten Stirnrades gebildeten Zahnstangenabschnitt übergeht, wobei der Wälzkreisdurchmesser des ersten Zahnstangenabschnitts um ein Vielfaches größer als der Wälzkreisdurchmesser des zweiten Zahnstangenabschnitts gewählt ist.

Vorteilhaft wird allein durch die Verstellbewegung der Zahnstange mit dem daran befestigten Abdeckelement auf dem zugeordneten, sich etwa mittig des Abdeckelements erstreckenden Zahnrad das Freigeben und Schließen der Öffnung bewirkt. Es ist bevorzugt vorgesehen, dass das Abdeckelement an seiner Unterseite eine einzige Zahnstange aufweist. Das Abdeckelement ist dann besonders einfach und kostengünstig herstellbar.

Ausgehend von einer Anordnung zum Freigeben und Schließen einer in einer Deckfläche eines Innenausstattungsteils eines Fahrzeugs, insbesondere Kraftfahrzeugs, vorgesehenen Öffnung mittels eines verstellbaren Abdeckelements, wobei das Abdeckelement durch ein Flächenelement mit einer Oberseite und einer Unterseite gebildet und von einer Geschlossenstellung, in welcher das Abdeckelement die besagte Öffnung einnimmt, in eine Offenstellung, in welcher das Abdeckelement durch Verstellung desselben die Öffnung freigibt, und zurück überführbar ist, wobei das Abdeckelement an seiner Unterseite eine einzige, in Verstellrichtung des Abdeckelements weisende Zahnstange aufweist, die ihrerseits mit einem zugeordneten Zahnrad kämmt, wobei das Zahnrad unter Vermittlung einer drehangetriebenen und mit dem Zahnrad drehfest verbundenen Welle an einem mit dem Innenausstattungsteil verbundenen Rahmenelement drehgelagert ist, und wobei das Abdeckelement infolge einer Drehbewegung des mit der Zahnstange kämmenden Zahnrades relativ zum Rahmenelement und demgemäß relativ zur Öffnung verstellbar ist, wird die gestellte Aufgabe ferner dadurch gelöst, dass die Zahnstange eine derartige, auf dem Zahnrad abwälzende Wälzkontur aufweist, dass während des Freigebens der Öffnung das Abdeckelement unter die die Öffnung begrenzende Deckfläche des Innenausstattungsteils taucht, und dass die Wälzkontur der Zahnstange entweder
a) durch einen ersten, geraden Zahnstangenabschnitt gebildet ist, der in einen zweiten, gekrümmten und durch einen Sektor eines innenverzahnten Stirnrades gebildeten Zahnstangenabschnitt übergeht, oder
b) durch einen ersten, gekrümmten und durch einen Sektor eines innenverzahnten Stirnrades gebildeten Zahnstangenabschnitt gebildet ist, der in einen zweiten, gekrümmten und durch einen Sektor eines innenverzahnten Stirnrades gebildeten Zahnstangenabschnitt übergeht, wobei der Wälzkreisdurchmesser des ersten Zahnstangenabschnitts um ein Vielfaches größer als der Wälzkreisdurchmesser des zweiten Zahnstangenabschnitts gewählt ist.

In vorteilhafter Weiterbildung der Erfindung erstreckt sich die Zahnstange mittig des Abdeckelements, sofern das Abdeckelement über die Fläche desselben gesehen homogen ausgebildet ist und beidseitige Führungsmaßnahmen des Abdeckelements am Rahmenelement, insbesondere infolge äußerst geringer Reibung, vernachlässigbar sind oder die aus besagten Führungsmaßnahmen an beiden Seiten des Abdeckelements angreifenden Kräfte, wie insbesondere Reibkräfte, sich ausgleichen.

Durch die gewählte Wälzkontur der Zahnstange nach Ausführungsvariante a) ist ein Verfahrweg des Abdeckelements bzw. eine Kurve vorgegeben, die das Abdeckelement während des Freigebens und Schließens der Öffnung beschreibt. Die zweite Ausführungsvariante b) unterscheidet sich von der ersten Ausführungsvariante a) im Wesentlichen dadurch, dass der erste, gerade Zahnstangenabschnitt nunmehr durch einen gekrümmten, insbesondere lediglich leicht gekrümmten ersten Zahnstangenabschnitt ersetzt ist. Durch diese Maßnahme ist vorteilhaft ein Verfahrweg bzw. eine Kurve des Abdeckelements darstellbar, der/die während des Freigebens und Schließens der Öffnung noch besser an die Kontur der die Öffnung begrenzenden Deckfläche des Innenausstattungsteils angepasst ist. Hieraus kann in vorteilhafter Weise insbesondere auch eine Minderung des erforderlichen Bauraums zum Verfahren des Abdeckelements unterhalb des Innenausstattungsteils resultieren.

Die Unteransprüche beschreiben bevorzugte Weiterbildungen oder Ausgestaltungen der Erfindung.

Danach ist vorgesehen, dass die mit dem Zahnrad kämmende Zahnstange innerhalb der Bewegungsebene des Abdeckelements verdrehungsfrei angeordnet ist. Unter verdrehungsfrei wird dabei verstanden, dass am Eingriffspunkt des Zahnrades in die Zahnstange ein Drehmoment-Gleichgewicht zu verzeichnen ist, indem sich bei seitlicher Führung des Abdeckelements ein rechtsdrehendes und ein linksdrehendes Moment aufheben (Moment = 0), wodurch einer nachteiligen Drehbewegung des Abdeckelements um eine orthogonal zur Bewegungsebene angeordnete Drehachse und damit einhergehend einem Schräglauf des Abdeckelements und in der Folge einem Verklemmen desselben im Rahmenelement des Innenausstattungsteils wirkungsvoll begegnet wird.

Bevorzugt sind die Zahnstangenabschnitte derart am Abdeckelement angeordnet, dass in Geschlossenstellung des Abdeckelements der zweite Zahnstangenabschnitt mit dem Zahnrad im Eingriff ist, wogegen in Offenstellung des Abdeckelements der erste Zahnstangenabschnitt mit dem Zahnrad im Eingriff ist.

Um eine sichere Führung des Abdeckelements während des Öffnungs- und Schließvorgangs zu gewährleisten, sind in Verstellrichtung des Abdeckelements gesehen beidseitig an demselben je ein vorderer und ein hinterer Führungszapfen angeordnet, welche Führungszapfen in einer Führungsnut des Rahmenelements verschiebbar zwangsgeführt sind. Die bevorzugt beidseitig des Abdeckelements angeordneten Führungsnuten im Rahmenelement sind dabei bevorzugt zueinander kongruent ausgebildet. Die jeweilige Führungsnut ist dabei durch einen vorderen, dem vorderen Führungszapfen zugeordneten und einen hinteren, dem hinteren Führungszapfen zugeordneten Führungsnutabschnitt gebildet. Zweckmäßigerweise können dabei die Führungsnutabschnitte je Seite voneinander separiert ausgebildet sein, um in Abhängigkeit des gewählten Verfahrweges des Abdeckelements eine weitestgehend voneinander unabhängige Gestaltung der Führungsnutabschnitte zu erlauben. Vorzugsweise weisen die Führungsnutabschnitte je Seite einen derartigen Verlauf auf, dass ausgehend von der Geschlossenstellung des Abdeckelements dasselbe während des Öffnungsvorganges zunächst zahnradseitig um einen bestimmten Winkel "α" zum Zahnrad hin angekippt sowie schräg in Richtung Zahnrad geführt und schließlich entlang einer Geraden oder nahezu einer Geraden verfahren wird. Zu Beginn des Öffnungsvorganges taucht das Abdeckelement dann sozusagen unter die die Öffnung begrenzende Deckfläche des Innenausstattungsteils. Um den erforderlichen Bauraum zur Gewährleistung der Bewegung des Abdeckelements noch weiter zu minimieren, kann in Fortbildung der Erfindung vorgesehen sein, dass je Seite die Führungsnutabschnitte einen derartigen Verlauf aufweisen, dass das in Offenstellung des Abdeckelements nunmehr dem Zahnrad abgewandte Ende des Abdeckelements um einen bestimmten Winkel "β" zur besagten Geraden angestellt ist/wird. So kann dieses Ende in Abhängigkeit des Konturverlaufes der Deckfläche des Innenausstattungsteils beispielsweise nach oben oder nach unten um besagten Winkel "β" angestellt werden.

Besonders vorteilhaft ist die erfindungsgemäße Anordnung zum Einbau in ein Innenausstattungsteil in Form einer Instrumententafel des Fahrzeugs geeignet, um beispielsweise ein Head-Up-Display abzudecken. Unter einem Head-Up-Display wird ein Informationsanzeigesystem verstanden, bei dem die Informationen aus der Instrumententafel heraus und durch eine Öffnung in derselben hindurch in das Sichtfeld des Fahrzeugführers, beispielsweise an eine Windschutzscheibe des Fahrzeugs oder an eine separate Combiner-Scheibe des Head-Up-Displays projiziert werden. Vorliegend wird mittels des Abdeckelements die Öffnung geschlossen, wenn besagte Combiner-Scheibe eingefahren ist oder freigegeben, wenn die Combiner-Scheibe ausgefahren wird. Unter einer Combiner-Scheibe wird dabei eine teilspiegelnde, lichtdurchlässige Scheibe verstanden.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: eine perspektivische Aufsicht auf ein Innenausstattungsteil eines Fahrzeugs mit einer erfindungsgemäßen Anordnung zum Freigeben und Schließen einer Öffnung im Innenausstattungsteil,
- Fig. 2: die Anordnung nach Fig. 1 in einer perspektivischen Unteransicht,
- Fig. 3: die Anordnung nach Fig. 1 und 2 in einer Unteransicht,
- Fig. 4: die Anordnung nach Fig. 1 bis 3 in einer Schnittansicht mit einem auf einem Rahmenelement verstellbar gelagerten Abdeckelement (Schnitt I-I nach Fig. 3),
- Fig. 5: eine schematische Darstellung eines Zahnstangen- und Führungsnutverlaufs des Abdeckelements,
- Fig. 6a-d: das Abdeckelement in vier verschiedenen Verstellpositionen während des Freigebens der Öffnung im Innenausstattungsteil,
- Fig. 7a-b: perspektivische Darstellungen des Abdeckelements korrespondierend mit der Verstellposition gemäß Fig. 6c (Zwischenstellung), und
- Fig. 8a-b: perspektivische Darstellungen des Abdeckelements korrespondierend mit der Verstellposition gemäß Fig. 6d (Offenstellung).

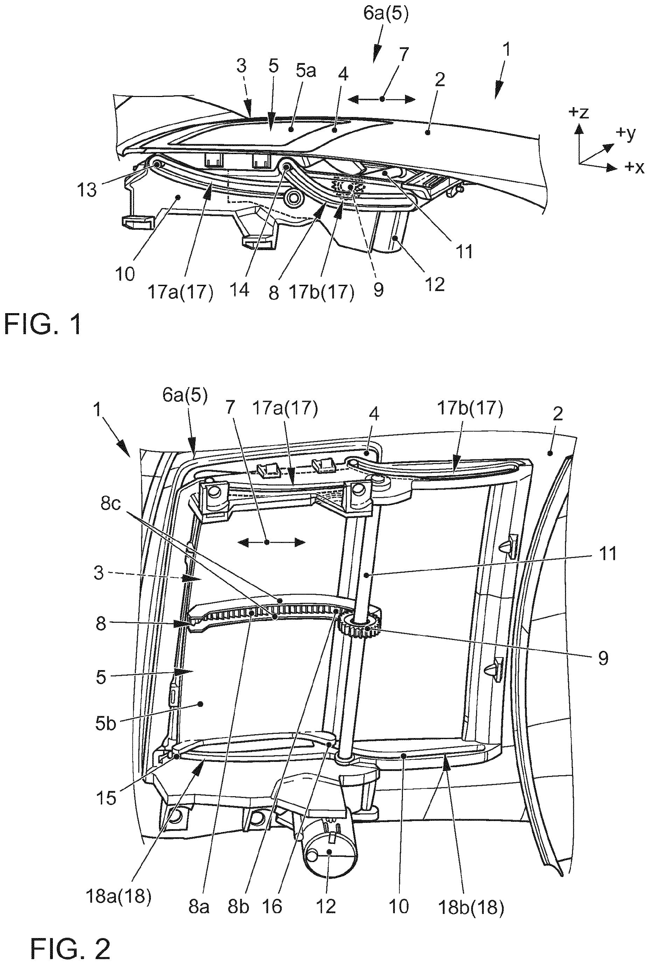

Die Fig. 1 und 2 zeigen zunächst einen relevanten Abschnitt eines Innenausstattungsteils 1, vorliegend beispielhaft einer Instrumententafel eines nicht zeichnerisch dargestellten Fahrzeugs, insbesondere Kraftfahrzeugs. Das Innenausstattungsteil 1 weist in einer horizontalen oder weitestgehend horizontalen oberen Deckfläche 2 eine Öffnung 3 auf, die ihrerseits von einer sich an der Deckfläche 2 abstützenden transparenten Schutzabdeckung 4 abgedeckt ist.

Gemäß diesem Ausführungsbeispiel gewährleistet besagte Öffnung 3 den geometrischen Strahlengang der mittels eines nicht zeichnerisch dargestellten Head-Up-Displays erzeugten Lichtstrahlen. Wie bereits oben ausgeführt, wird unter einem Head-Up-Display ein Informationsanzeigesystem verstanden, bei dem die Informationen aus dem Innenausstattungsteil 1 bzw. der Instrumententafel des Fahrzeugs heraus und durch die Öffnung 3 in derselben hindurch in das Sichtfeld des Fahrzeugführers, beispielsweise an eine Windschutzscheibe des Fahrzeugs oder an eine separate sogenannte Combiner-Scheibe des Head-Up-Displays projiziert werden. Mittels eines verstellbaren Abdeckelements 5 kann dabei die Öffnung 3 verschlossen oder freigegeben werden.

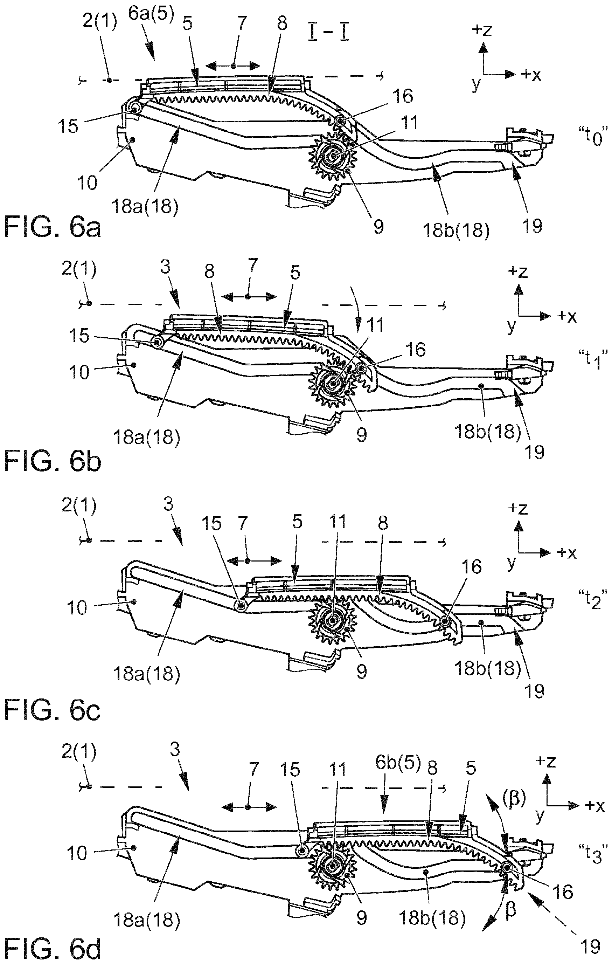

Das besagte Abdeckelement 5 ist durch ein Flächenelement gebildet und von einer Geschlossenstellung 6a, in welcher das Abdeckelement 5 die besagte Öffnung 3 einnimmt (vgl. insbes. Fig. 1-4, 6a), in eine Offenstellung 6b, in welcher das Abdeckelement 5 durch Verstellung desselben die Öffnung 3 freigibt (vgl. insbes. Fig. 6b-d, 7a-8b), und zurück überführbar. Das Abdeckelement 5 ist vorliegend derart verstellbar, dass es während des Öffnungsvorganges (vgl. insbes. Fig. 6b-d, 7a-8b) sozusagen längs der Öffnung 3 und unterhalb der die Öffnung 3 begrenzenden Deckfläche 2 des Innenausstattungsteils 1 verfährt und sich demgemäß im freigegebenen Zustand der Öffnung 3 nicht über die Deckfläche 2 des Innenausstattungsteils 1 erhebt. Dabei kann das Abdeckelement 5 zumindest abschnittsweise parallel oder weitestgehend parallel zur besagten Deckfläche 2 verfahren.

Das Abdeckelement 5 weist eine Oberseite 5a und eine Unterseite 5b auf. Auf seiner der Deckfläche 2 des Innenausstattungsteils 1 abgewandten Unterseite 5b weist das Abdeckelement 5 gemäß diesem Ausführungsbeispiel eine einzige, sich in Verstellrichtung 7 des Abdeckelements erstreckende Zahnstange 8 auf. Das Abdeckelement 5 und die Zahnstange 8 sind gemäß einer bevorzugten Ausführungsvariante einstückig und materialeinheitlich aus einem Kunststoff, beispielsweise aus einem Polyblend wie zum Beispiel einem PC/ABS (PC = Polycarbonat; ABS = Acrylnitril-Butadien-Styrol), nach einem an sich bekannten Kunststoff-Spritzgießverfahren hergestellt. Statt einer einzigen Zahnstange 8 könnten im Rahmen der Erfindung auch beispielsweise zwei oder drei mit geringem Abstand benachbarte, sich etwa mittig des Abdeckelements 5 erstreckende Zahnstangen verwendet werden.

Die besagte Verstellrichtung 7 weist gemäß diesem Ausführungsbeispiel in Längsrichtung (±X-Richtung) des Fahrzeugs. Die Zahnstange 8 kämmt ihrerseits mit einem zugeordneten Zahnrad 9. Das Zahnrad 9 besteht ebenfalls aus einem Kunststoff, bevorzugt aus einem PA66, wobei PA für Polyamid steht. Das Zahnrad 9 ist an einem mit dem Innenausstattungsteil 1 verbundenen und unterhalb der Deckfläche 2 desselben angeordneten Rahmenelements 10 drehgelagert. Ferner ist das Zahnrad 9 mittels einer drehangetriebenen Welle 11 drehfest verbunden. Drehangetrieben wird die Welle 11 mittels eines Elektromotors 12, der seinerseits ortsfest am Rahmenelement 10 befestigt ist (vgl. insbes. Fig.1-3, 7a-8b). Infolge einer Drehbewegung des mit der Zahnstange 8 kämmenden Zahnrades 9 ist das Abdeckelement 5 relativ zum Rahmenelement 10 und demgemäß zur Öffnung 3 in vorliegend Längsrichtung (±X-Richtung) des Fahrzeugs verstellbar.

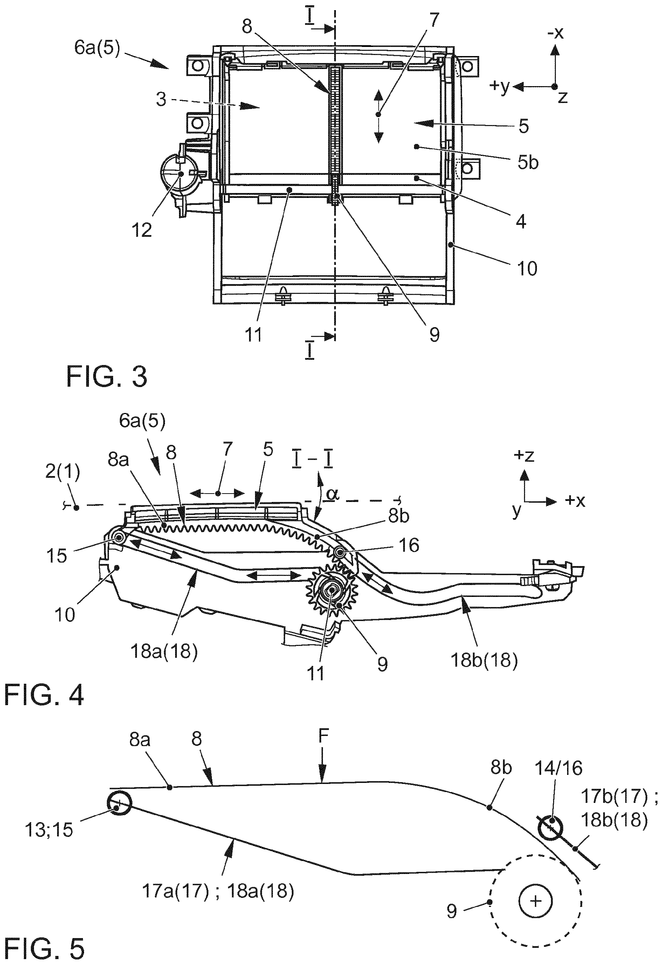

Vorteilhaft ist die die mit dem Zahnrad 9 kämmende Zahnstange 8 innerhalb der Bewegungsebene des Abdeckelements 5 verdrehungsfrei angeordnet. Unter verdrehungsfrei wird dabei verstanden, dass am Eingriffspunkt des Zahnrades 9 in die Zahnstange 8 ein Drehmoment-Gleichgewicht zu verzeichnen ist, indem sich bei seitlicher Führung des Abdeckelements 5, worauf unten näher eingegangen wird, ein rechtsdrehendes und ein linksdrehendes Moment aufheben (Moment = 0), wodurch einer nachteiligen Drehbewegung des Abdeckelements 5 um eine orthogonal zur Bewegungsebene angeordnete Drehachse und damit einhergehend einem Schräglauf des Abdeckelements 5 und in der Folge einem Verklemmen desselben im Rahmenelement 10 des Innenausstattungsteils 1 wirkungsvoll begegnet wird. Wie insbesondere der Fig. 3 zu entnehmen ist, erstreckt sich gemäß diesem Ausführungsbeispiel die Zahnstange 8 mittig des Abdeckelements 5, da bevorzugt das Abdeckelement 5 über die Fläche desselben gesehen homogen ausgebildet ist und beidseitige Führungsmaßnahmen des Abdeckelements 5 am Rahmenelement 10, insbesondere infolge äußerst geringer Reibung, vernachlässigbar sind oder die aus besagten Führungsmaßnahmen an beiden Seiten des Abdeckelements 5 angreifenden Kräfte, wie insbesondere Reibkräfte, sich ausgleichen. Ungeachtet dessen ist aufgrund vorstehender Erläuterungen auch eine außermittige Anordnung der Zahnstange 8 durch die Erfindung mit erfasst.

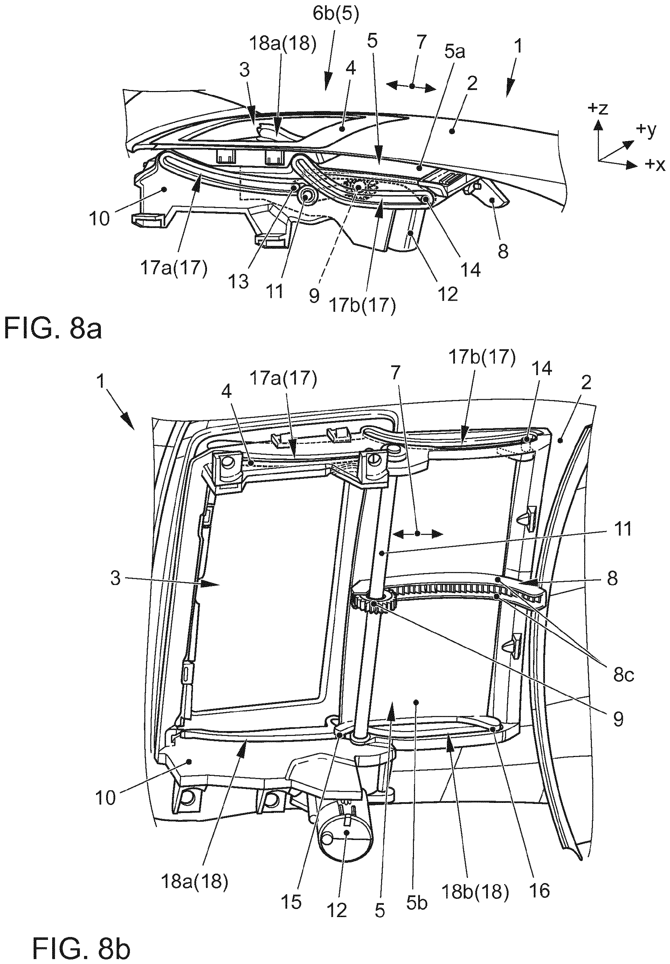

Wie den Zeichnungsfiguren weiter zu entnehmen ist, weist die Zahnstange 8 gemäß einer ersten vorteilhaften Ausführungsvariante der Erfindung eine auf dem Zahnrad 9 abwälzende Wälzkontur auf, die durch einen ersten, geraden Zahnstangenabschnitt 8a gebildet ist, der in einen zweiten, gekrümmten und durch einen Sektor eines innenverzahnten Stirnrades gebildeten Zahnstangenabschnitt 8b übergeht (vgl. insbes. Fig. 4). Durch die gewählte Wälzkontur der Zahnstange 8 ist ein Verfahrweg des Abdeckelements 5 bzw. eine Kurve vorgegeben, die das Abdeckelement 5 während des Freigebens und Schließens der Öffnung beschreibt. Vorliegend sind die Zahnstangenabschnitte 8a, 8b derart am Abdeckelement 5 angeordnet, dass in der Geschlossenstellung 6a (Fig. 1-4, 6a) des Abdeckelements 5 der zweite Zahnstangenabschnitt 8b mit dem Zahnrad 9 im Eingriff ist, wogegen in der Offenstellung 6b (insbes. Fig. 6d, 8a-b) des Abdeckelements 5 der erste Zahnstangenabschnitt 8a mit dem Zahnrad 9 im Eingriff ist.

Um eine sichere Führung des Abdeckelements 5 während des Öffnungs- und Schließvorgangs zu gewährleisten, ist gemäß Fig. 2 die Zahnstange mit seitlichen Führungsstegen 8c ausgebildet, welche Führungsstege 8c das im Eingriff stehende Zahnrad 9 seitlich begrenzen und führen. Überdies sind in Verstellrichtung 7 des Abdeckelements 5 gesehen beidseitig am Abdeckelement 5 je ein vorderer und ein hinterer Führungszapfen 13, 14; 15, 16 angeordnet. Die Führungszapfen 13, 14; 15, 16 je Seite sind in einer zugeordneten Führungsnut 17, 18 des Rahmenelements 10 verschiebbar zwangsgeführt. Die Führungszapfen 13, 14; 15, 16 sind bevorzugt in den Führungsnuten 17, 18 gleitend geführt. Es ist eine Reibpaarung mit möglichst geringem Reibungskoeffizienten gewählt. Gemäß diesem Ausführungsbeispiel ist für die Führungszapfen 13, 14; 15, 16 ein Kunststoff, bevorzugt ein POM (POM = Polyoxymethylen), gewählt. POM zeichnet sich insbesondere durch eine hohe Festigkeit, Härte und Steifigkeit sowie durch eine hohe Abriebfestigkeit, einen niedrigen Reibungskoeffizienten und gute Gleiteigenschaften aus. Die Führungsnuten 17, 18 bestehen gemäß diesem Ausführungsbeispiel zumindest an ihrer mit den Führungszapfen 13, 14; 15, 16 in Kontakt tretenden Oberfläche aus einem Kunststoff, bevorzugt PBT (PBT = Polybutylenterephthalat). PBT weist ebenfalls eine hohe Festigkeit und Steifigkeit sowie guten Reibungs- und Verschleißeigenschaften auf.

Die Führungsnut 17, 18 kann dabei durchgängig ausgebildet sein und sowohl den vorderen als auch den hinteren Führungszapfen 13, 14; 15, 16 je Seite aufnehmen (nicht zeichnerisch dargestellt). Bevorzugt jedoch bilden die Führungsnuten 17, 18 vordere und hintere Führungsnutabschnitte 17a, 17b; 18a, 18b aus, die voneinander separiert sind (vgl. insbes. Fig. 4). Dabei sind den vorderen Führungsnutabschnitten 17a, 18a die vorderen Führungszapfen 13, 15 und den hinteren Führungsnutabschnitten 17b, 18b die hinteren Führungszapfen 14, 16 zugeordnet.

Die Führungsnutabschnitte 17a, 17b; 18a, 18b je Seite weisen einen derartigen Verlauf auf, dass ausgehend von der Geschlossenstellung 6a des Abdeckelements 5 dasselbe während des Öffnungsvorganges zunächst zahnradseitig um einen bestimmten Winkel "α" zum Zahnrad 9 hin angekippt sowie schräg in Richtung Zahnrad 9 geführt und schließlich entlang einer Geraden oder nahezu einer Geraden verschoben wird (Fig. 4, 5). Unter der besagten Geraden wird vorliegend ein gerader Abschnitt des Verlaufs verstanden, der horizontal oder nahezu horizontal und/oder parallel oder nahezu parallel zur Deckfläche 2 des Innenausstattungsteils 1 verläuft.

Die vorderen Führungsnutabschnitte 17a, 18a weisen insoweit ausgehend von der besagter Öffnung 3 nach Fahrzeug-hinten hin einen schrägen Verlauf nach unten auf, der in einen geraden, insbesondere horizontalen oder nahezu horizontalen bzw. parallelen oder nahezu parallelen Verlauf zur Deckfläche 2 übergeht. Die hinteren Führungsnutabschnitte 17b, 18b weisen ebenfalls zunächst schräg nach unten, um dann in eine Gerade oder nahezu eine Gerade gemäß vorstehender Definition überzugehen. Der Winkel "α" ergibt sich im Wesentlichen aus dem schrägen Verlauf der Führungsnutabschnitte 17a, 17b; 18a, 18b sowie dem gewählten Wälzkreisdurchmesser des zweiten, gekrümmten und durch einen Sektor eines innenverzahnten Stirnrades gebildeten Zahnstangenabschnitts 8b. Infolgedessen taucht sozusagen zu Beginn des Öffnungsvorganges das Abdeckelement 5 unter die die Öffnung begrenzende Deckfläche 2 des Innenausstattungsteils 1 und wird anschließend unterhalb der besagten Deckfläche 2 weitergeführt.

Kurz gesagt sorgt der zweite, gekrümmte Zahnstangenabschnitt 8b in Kombination mit besagten Schrägen der Führungsnutabschnitte 17a, 17b; 18a, 18b für das Abtauchen des Abdeckelements 5 zu Beginn des Öffnungsvorganges. Diese Bewegung nach unten nimmt im Laufe des Verfahrwegs ab, so dass das Abdeckelement 5 nachdem es abgesenkt ist und sich der erste, gerade Zahnstangenabschnitt 8a im Eingriff mit dem Zahnrad 9 befindet, ohne weiteres Absenken verfährt. Bevorzugt ist die Schräge des vorderen Führungsabschnitts 17a, 18a derart gewählt bzw. eingestellt, dass ein Nachgeben des Abdeckelements 5 bei äußerer (missbräuchlicher) Belastung "F" verhindert, zumindest jedoch wirkungsvoll behindert ist (vgl. Fig. 5). Diese Schräge soll daher nicht zu steil gestaltet werden. Überdies kann dieses Nachgeben des Abdeckelements 5 auch durch die gewählte Übersetzung des Motorgetriebes verhindert, zumindest jedoch wirkungsvoll behindert werden.

Wie den Fig. 1-4, 7a-8b zu entnehmen ist, ist gemäß einer ersten bevorzugten Ausgestaltungsvariante der hinteren Führungsnutabschnitte 17b, 18b der Verlauf derselben zum hinteren Ende hin weitestgehend homogen respektive horizontal. Um den erforderlichen Bauraum zur Gewährleistung der Bewegung des Abdeckelements 5 noch weiter zu minimieren, ist im Hinblick auf die Fig. 6a-6d gemäß einer zweiten bevorzugten Ausgestaltungsvariante der hinteren Führungsnutabschnitte 17b, 18b vorgesehen, dass die hinteren Enden 19 der hinteren Führungsnutabschnitte 17b, 18b einen derartigen Verlauf aufweisen, dass das in Offenstellung 6b des Abdeckelements 5 nunmehr dem Zahnrad 9 abgewandte Ende des Abdeckelements 5 um einen bestimmten Winkel "β" zur besagten Geraden angestellt ist/wird. So kann dieses Ende des Abdeckelements 5 in Abhängigkeit des Konturverlaufes der Deckfläche 2 des Innenausstattungsteils 1 beispielsweise nach oben oder nach unten um besagten Winkel "β" angestellt werden (Fig. 6d).Gemäß diesem Ausführungsbeispiel verlaufen die besagten hinteren Enden 19 der hinteren Führungsnutabschnitte 17b, 18b nach unten, wodurch in der Ofenstellung 6b des Abdeckelements 5 das dem Zahnrad 9 abgewandte Ende des Abdeckelements 5 um einen bestimmten Winkel "β" zur besagten Geraden nach unten angestellt ist (Fig. 2).

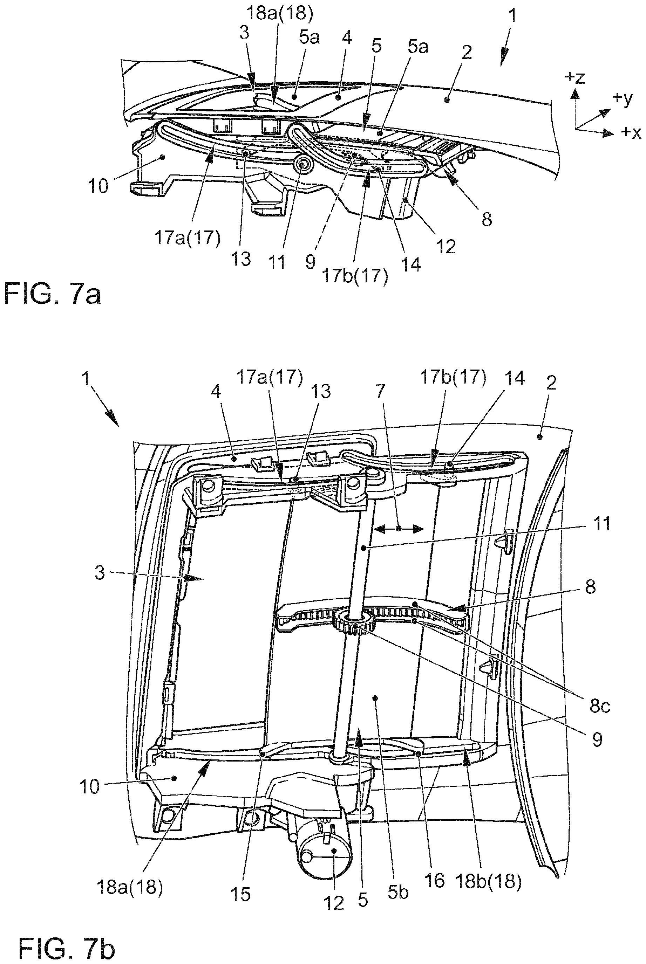

Die Fig. 6a-6d zeigen die erfindungsgemäße Anordnung in Funktion. Gemäß Fig. 6a, korrespondierend mit den Fig. 1-4, befindet sich das Abdeckelement 5 zu einem Zeitpunkt "t₀" in seiner Geschlossenstellung 6a. Gesetzt den Fall, das Abdeckelement 5 soll in seine Offenstellung 6b (Fig. 6d, korrespondierend mit den Fig. 8a-b) überführt werden, wird das Zahnrad 8 mittels des hier nicht dargestellten Elektromotors 12 drehangetrieben derart, dass das Abdeckelement 5 unter Vermittlung der Zahnstange 8 sowie zwangsgeführt in den Führungsnuten 17, 18 in Richtung besagter Offenstellung 6b, d. h. gemäß den Zeichnungsfiguren 6a-6d von links nach rechts verstellt bzw. verfahren wird. Der Verfahrweg des Abdeckelements 5 ist durch den Verlauf der Führungsnuten 17, 18 bzw. deren Führungsnutabschnitte 17a, 17b; 18a, 18b sowie die Wälzkontur der vorstehend beschriebenen Zahnstange 8 bzw. deren Zahnstangenabschnitte 8a, 8b vorbestimmt. Gemäß Fig. 6b taucht dabei das Abdeckelement 5 zu einem Zeitpunkt "t₁" unter die hier lediglich schematisch durch eine gestrichelte Linie angedeutete Deckfläche 2 des Innenausstattungsteils 1. Gemäß Fig. 6c, korrespondierend mit den Fig. 7a-b, wird zu einem Zeitpunkt "t₂" das Abdeckelement 5 auf einer Geraden oder nahezu einer Geraden, die vorliegend parallel oder nahezu parallel zur Deckfläche 2 verläuft, geführt. Schließlich erreicht gemäß Fig. 6d, korrespondierend mit den Fig. 8a-b, zu einem Zeitpunkt "t₃" das Abdeckelement 5 seine Offenstellung 6b, wobei wahlweise dessen dem Zahnrad 9 abgewandtes Ende um einen bestimmten Winkel "β" entweder zur besagten Geraden nach unten oder oben angestellt ist.

Gemäß einer zweiten, hier nicht zeichnerisch dargestellten, jedoch für einen Fachmann leicht nachvollziehbaren vorteilhaften Ausführungsvariante der Erfindung ist vorgesehen, dass die Zahnstange 8 eine auf dem Zahnrad 9 abwälzende Wälzkontur aufweist, die durch einen ersten, gekrümmten und durch einen Sektor eines innenverzahnten Stirnrades gebildeten Zahnstangenabschnitt 8a gebildet ist, der in einen zweiten, gekrümmten und durch einen Sektor eines innenverzahnten Stirnrades gebildeten Zahnstangenabschnitt 8b übergeht. Hierbei ist der Wälzkreisdurchmesser des ersten Zahnstangenabschnitts 8a um ein Vielfaches größer gegenüber dem Wälzkreisdurchmesser des zweiten Zahnstangenabschnitts 8b gewählt. Diese zweite Ausführungsvariante unterscheidet sich von der ersten Ausführungsvariante demgemäß dadurch, dass der erste, gemäß der ersten Ausführungsvariante gerade Zahnstangenabschnitt 8a nunmehr durch einen gekrümmten, bevorzugt lediglich leicht gekrümmten ersten Zahnstangenabschnitt 8a ersetzt ist. Das heißt, der Wälzkreisdurchmesser des ersten Zahnstangenabschnitts 8a kann beispielsweise derart groß gewählt sein, dass ein nahezu gerader erster Zahnstangenabschnitt 8a gebildet ist. Durch diese Maßnahme ist vorteilhaft ein Verfahrweg bzw. eine Kurve des Abdeckelements 5 darstellbar, der/die während des Freigebens und Schließens der Öffnung 3 noch besser an die Kontur der die Öffnung 3 begrenzenden Deckfläche 2 des Innenausstattungsteils 1 angepasst ist. Hieraus resultiert in vorteilhafter Weise insbesondere auch eine Minderung des erforderlichen Bauraums zum Verfahren des Abdeckelements 5 unterhalb des Innenausstattungsteils 1.

### Bezugszeichenliste

- 1: Innenausstattungsteil
- 2: Deckfläche
- 3: Öffnung
- 4: Schutzabdeckung
- 5: Abdeckelement
- 5a: Oberseite (Abdeckelement 5)
- 5b: Unterseite (Abdeckelement 5)
- 6a: Geschlossenstellung (Abdeckelement 5)
- 6b: Offenstellung (Abdeckelement 5)
- 7: Verstellrichtung
- 8: Zahnstange
- 8a: erster Zahnstangenabschnitt
- 8b: zweiter Zahnstangenabschnitt
- 8c: Führungsstege (Zahnstange 8)
- 9: Zahnrad
- 10: Rahmenelement
- 11: Welle
- 12: Elektromotor
- 13: vorderer Führungszapfen
- 14: hinterer Führungszapfen
- 15: vorderer Führungszapfen
- 16: hinterer Führungszapfen
- 17: Führungsnut
- 17a: vorderer Führungsnutabschnitt
- 17b: hinterer Führungsnutabschnitt
- 18: Führungsnut
- 18a: vorderer Führungsnutabschnitt
- 18b: hinterer Führungsnutabschnitt
- 19: hintere Enden (hintere Führungsnutabschnitte 17b, 18b)

## Patentansprüche

1. Anordnung zum Freigeben und Schließen einer in einer Deckfläche (2) eines Innenausstattungsteils (1) eines Fahrzeugs, insbesondere Kraftfahrzeugs, vorgesehenen Öffnung (3) mittels eines verstellbaren Abdeckelements (5), wobei das Abdeckelement (5) durch ein Flächenelement mit einer Oberseite (5a) und einer Unterseite (5b) gebildet und von einer Geschlossenstellung (6a), in welcher das Abdeckelement (5) die besagte Öffnung (3) einnimmt, in eine Offenstellung (6b), in welcher das Abdeckelement (5) durch Verstellung desselben die Öffnung (3) freigibt, und zurück überführbar ist, wobei das Abdeckelement (5) an seiner Unterseite (5b) eine einzige, in Verstellrichtung (7) des Abdeckelements (5) weisende Zahnstange (8) aufweist, die ihrerseits mit einem zugeordneten Zahnrad (9) kämmt, wobei das Zahnrad (9) unter Vermittlung einer drehangetriebenen und mit dem Zahnrad (9) drehfest verbundenen Welle (11) an einem mit dem Innenausstattungsteil (1) verbundenen Rahmenelement (10) drehgelagert ist, und wobei das Abdeckelement (5) infolge einer Drehbewegung des mit der Zahnstange (8) kämmenden Zahnrades (9) relativ zum Rahmenelement (10) und demgemäß relativ zur Öffnung (3) verstellbar ist, **dadurch gekennzeichnet, dass** die Zahnstange (8) eine derartige, auf dem Zahnrad (9) abwälzende Wälzkontur aufweist, dass während des Freigebens der Öffnung (3) das Abdeckelement (5) unter die die Öffnung (3) begrenzende Deckfläche (2) des Innenausstattungsteils (1) taucht, und dass die Wälzkontur der Zahnstange (8) entweder
a) durch einen ersten, geraden Zahnstangenabschnitt (8a) gebildet ist, der in einen zweiten, gekrümmten und durch einen Sektor eines innenverzahnten Stirnrades gebildeten Zahnstangenabschnitt (8b) übergeht, oder
b) durch einen ersten, gekrümmten und durch einen Sektor eines innenverzahnten Stirnrades gebildeten Zahnstangenabschnitt (8a) gebildet ist, der in einen zweiten, gekrümmten und durch einen Sektor eines innenverzahnten Stirnrades gebildeten Zahnstangenabschnitt (8b) übergeht, wobei der Wälzkreisdurchmesser des ersten Zahnstangenabschnitts (8a) um ein Vielfaches größer als der Wälzkreisdurchmesser des zweiten Zahnstangenabschnitts (8b) gewählt ist.

2. Anordnung nach Anspruch 1, **dadurch gekennzeichnet, dass** die Zahnstange (8) sich etwa mittig des Abdeckelements (5) erstreckt.

3. Anordnung zum Freigeben und Schließen einer in einer Deckfläche (2) eines Innenausstattungsteils (1) eines Fahrzeugs, insbesondere Kraftfahrzeugs, vorgesehenen Öffnung (3) mittels eines verstellbaren Abdeckelements (5), wobei das Abdeckelement (5) durch ein Flächenelement mit einer Oberseite (5a) und einer Unterseite (5b) gebildet und von einer Geschlossenstellung (6a), in welcher das Abdeckelement (5) die besagte Öffnung (3) einnimmt, in eine Offenstellung (6b), in welcher das Abdeckelement (5) durch Verstellung desselben die Öffnung (3) freigibt, und zurück überführbar ist, wobei das Abdeckelement (5) an seiner Unterseite (5b) eine sich etwa mittig des Abdeckelements (5) erstreckende, in Verstellrichtung (7) des Abdeckelements (5) weisende Zahnstange (8) aufweist, die ihrerseits mit einem zugeordneten Zahnrad (9) kämmt, wobei das Zahnrad (9) unter Vermittlung einer drehangetriebenen und mit dem Zahnrad (9) drehfest verbundenen Welle (11) an einem mit dem Innenausstattungsteil (1) verbundenen Rahmenelement (10) drehgelagert ist, und wobei das Abdeckelement (5) infolge einer Drehbewegung des mit der Zahnstange (8) kämmenden Zahnrades (9) relativ zum Rahmenelement (10) und demgemäß relativ zur Öffnung (3) verstellbar ist, **dadurch gekennzeichnet, dass** die Zahnstange (8) eine derartige, auf dem Zahnrad (9) abwälzende Wälzkontur aufweist, dass während des Freigebens der Öffnung (3) das Abdeckelement (5) unter die die Öffnung (3) begrenzende Deckfläche (2) des Innenausstattungsteils (1) taucht, und dass die Wälzkontur der Zahnstange (8) entweder
a) durch einen ersten, geraden Zahnstangenabschnitt (8a) gebildet ist, der in einen zweiten, gekrümmten und durch einen Sektor eines innenverzahnten Stirnrades gebildeten Zahnstangenabschnitt (8b) übergeht, oder
b) durch einen ersten, gekrümmten und durch einen Sektor eines innenverzahnten Stirnrades gebildeten Zahnstangenabschnitt (8a) gebildet ist, der in einen zweiten, gekrümmten und durch einen Sektor eines innenverzahnten Stirnrades gebildeten Zahnstangenabschnitt (8b) übergeht, wobei der Wälzkreisdurchmesser des ersten Zahnstangenabschnitts (8a) um ein Vielfaches größer als der Wälzkreisdurchmesser des zweiten Zahnstangenabschnitts (8b) gewählt ist.

4. Anordnung nach Anspruch 3, **dadurch gekennzeichnet, dass** das Abdeckelement (5) an seiner Unterseite (5b) eine einzige Zahnstange (8) aufweist.

5. Anordnung nach einem der vorhergehenden Ansprüche, **dadurch gekennzeichnet, dass** die mit dem Zahnrad (9) kämmende Zahnstange (8) innerhalb der Bewegungsebene des Abdeckelements (5) verdrehungsfrei angeordnet ist.

6. Anordnung nach einem der vorhergehenden Ansprüche, **dadurch gekennzeichnet, dass** die Zahnstangenabschnitte (8a, 8b) derart am Abdeckelement (5) angeordnet sind, dass in Geschlossenstellung (6a) des Abdeckelements (5) der zweite Zahnstangenabschnitt (8b) mit dem Zahnrad (9) im Eingriff ist, wogegen in Offenstellung (6b) des Abdeckelements (5) der erste Zahnstangenabschnitt (8a) mit dem Zahnrad (9) im Eingriff ist.

7. Anordnung nach einem der vorhergehenden Ansprüche, **dadurch gekennzeichnet, dass** in Verstellrichtung (7) des Abdeckelements (5) gesehen beidseitig an demselben je ein vorderer und ein hinterer Führungszapfen (13, 14, 15, 16) angeordnet sind, welche Führungszapfen (13, 14, 15, 16) jeweils in einer zugeordneten Führungsnut (17, 18) des Rahmenelements (10) verschiebbar zwangsgeführt sind, wobei die Führungsnuten (17, 18) bevorzugt beidseitig des Rahmenelements (10) angeordnet sind.

8. Anordnung nach Anspruch 7, **dadurch gekennzeichnet, dass** die Führungsnuten (17, 18) jeweils durch einen vorderen und einen hinteren Führungsnutabschnitt (17a, 17b; 18a, 18b) gebildet sind.

9. Anordnung nach Anspruch 8, **dadurch gekennzeichnet, dass** die auf beiden Seiten des Rahmenelements (10) angeordneten Führungsnutabschnitte (17a, 17b; 18a, 18b) einen derartigen Verlauf aufweisen, dass ausgehend von der Geschlossenstellung (6a) des Abdeckelements (5) dasselbe während des Öffnungsvorganges zunächst zahnradseitig um einen Winkel "α" zum Zahnrad (9) hin angekippt sowie schräg in Richtung Zahnrad (9) geführt und schließlich entlang einer Geraden oder nahezu einer Geraden verfahren wird.

10. Anordnung nach einem der vorhergehenden Ansprüche, **dadurch gekennzeichnet, dass** das Innenausstattungsteil (1) eine Instrumententafel des Fahrzeugs ist.

11. Anordnung nach einem der vorhergehenden Ansprüche zum Abdecken eines Head-Up-Displays.

## Claims

1. Arrangement by way of which an opening (3) provided in a top surface (2) of an interior-equipment part (1) of a vehicle, in particular motor vehicle, is released and closed by means of an adjustable covering element (5), wherein the covering element (5) is formed by a surface-area element with an upper side (5a) and an underside (5b) and can be transferred from a closed position (6a), in which the covering element (5) occupies said opening (3), into an open position (6b), in which the covering element (5) releases the opening (3) by being adjusted, and back again, wherein, on its underside (5b), the covering element (5) has a single rack (8), which is oriented in the adjustment direction (7) of the covering element (5) and, for its part, meshes with an associated gearwheel (9), wherein the gearwheel (9) is mounted in a rotatable manner, by means of a rotationally driven shaft (11) connected in a rotationally fixed manner to the gearwheel (9), on a frame element (10), which is connected to the interior-equipment part (1), and wherein, as a result of a rotational movement of the gearwheel (9), which meshes with the rack (8), the covering element (5) can be adjusted relative to the frame element (10) and, accordingly, relative to the opening (3), **characterized in that** the rack (8) has such a rolling contour, which rolls on the gearwheel (9), that, as the opening (3) is being released, the covering element (5) descends beneath the top surface (2) of the interior-equipment part (1), said top surface delimiting the opening (3), and **in that** the rolling contour of the rack (8) either
a) is formed by a first, rectilinear rack portion (8a), which merges into a second, curved rack portion (8b), which is formed by a sector of an internally toothed spur wheel, or
b) is formed by a first, curved rack portion (8a), which is formed by a sector of an internally toothed spur wheel and merges into a second, curved rack portion (8b), which is formed by a sector of an internally toothed spur wheel, wherein the rolling circle diameter of the first rack portion (8a) is selected to be a number of times greater than the rolling circle diameter of the second rack portion (8b) .

2. Arrangement according to Claim 1, **characterized in that** the rack (8) extends approximately in the centre of the covering element (5).

3. Arrangement by way of which an opening (3) provided in a top surface (2) of an interior-equipment part (1) of a vehicle, in particular motor vehicle, is released and closed by means of an adjustable covering element (5), wherein the covering element (5) is formed by a surface-area element with an upper side (5a) and an underside (5b) and can be transferred from a closed position (6a), in which the covering element (5) occupies said opening (3), into an open position (6b), in which the covering element (5) releases the opening (3) by being adjusted, and back again, wherein, on its underside (5b), the covering element (5) has a rack (8) which extends approximately in the centre of the covering element (5), is oriented in the adjustment direction (7) of the covering element (5) and, for its part, meshes with an associated gearwheel (9), wherein the gearwheel (9) is mounted in a rotatable manner, by means of a rotationally driven shaft (11) connected in a rotationally fixed manner to the gearwheel (9), on a frame element (10), which is connected to the interior-equipment part (1), and wherein, as a result of a rotational movement of the gearwheel (9), which meshes with the rack (8), the covering element (5) can be adjusted relative to the frame element (10) and, accordingly, relative to the opening (3), **characterized in that** the rack (8) has such a rolling contour, which rolls on the gearwheel (9), that, as the opening (3) is being released, the covering element (5) descends beneath the top surface (2) of the interior-equipment part (1), said top surface delimiting the opening (3), and **in that** the rolling contour of the rack (8) either
a) is formed by a first, rectilinear rack portion (8a), which merges into a second, curved rack portion (8b), which is formed by a sector of an internally toothed spur wheel, or
b) is formed by a first, curved rack portion (8a), which is formed by a sector of an internally toothed spur wheel and merges into a second, curved rack portion (8b), which is formed by a sector of an internally toothed spur wheel, wherein the rolling circle diameter of the first rack portion (8a) is selected to be a number of times greater than the rolling circle diameter of the second rack portion (8b) .

4. Arrangement according to Claim 3, **characterized in that**, on its underside (5b), the covering element (5) has a single rack (8).

5. Arrangement according to one of the preceding claims, **characterized in that** the rack (8), which meshes with the gearwheel (9), is arranged so as not to rotate within the movement plane of the covering element (5).

6. Arrangement according to one of the preceding claims, **characterized in that** the rack portions (8a, 8b) are arranged on the covering element (5) such that, in the closed position (6a) of the covering element (5), the second rack portion (8b) is in engagement with the gearwheel (9), whereas, in the open position (6b) of the covering element (5), the first rack portion (8a) is in engagement with the gearwheel (9).

7. Arrangement according to one of the preceding claims, **characterized by** the arrangement, on either side of the covering element (5), of a respective front and rear guide stub (13, 14, 15, 16), as seen in the adjustment direction (7) of said covering element, which guide stubs (13, 14, 15, 16) are positively guided in a displaceable manner in each case in an associated guide groove (17, 18) of the frame element (10), wherein the guide grooves (17, 18) are arranged preferably on either side of the frame element (10).

8. Arrangement according to Claim 7, **characterized in that** the guide grooves (17, 18) are each formed by a front and rear guide-groove portion (17a, 17b; 18a, 18b).

9. Arrangement according to Claim 8, **characterized in that** the guide-groove portions (17a, 17b; 18a, 18b), which are arranged on either side of the frame element (10), follow such a course that, starting from the closed position (6a) of the covering element (5), the latter, during the opening operation, first of all is tilted on the gearwheel side by an angle "a" in the direction of the gearwheel (9), and guided obliquely in the direction of the gearwheel (9), and finally is displaced along a straight line, or more or less a straight line.

10. Arrangement according to one of the preceding claims, **characterized in that** the interior-equipment part (1) is an instrument panel of the vehicle.

11. Arrangement according to one of the preceding claims for covering a head-up display.

## Revendications

1. Dispositif de libération et de fermeture d'une ouverture (3) prévue dans une surface supérieure (2) d'un élément d'aménagement intérieur (1) d'un véhicule, notamment d'un véhicule automobile, au moyen d'un élément de recouvrement déplaçable (5), l'élément de recouvrement (5) étant formé par un élément de surface présentant un côté supérieur (5a) et un côté inférieur (5b) et pouvant être transféré d'une position fermée (6a), dans laquelle l'élément de recouvrement (5) occupe ladite ouverture (3), dans une position ouverte (6b) dans laquelle l'élément de couverture (5) libère par son déplacement l'ouverture (3), et inversement, l'élément de recouvrement (5) comportant sur son côté inférieur (5b) une seule crémaillère (8) qui est dirigée dans la direction de déplacement (7) de l'élément de recouvrement (5) et qui s'engrène de son côté avec une roue dentée associée (9), la roue dentée (9) étant montée à rotation sur un élément de cadre (10), relié à l'élément d'aménagement intérieur (1), par l'intermédiaire d'un arbre (11) entraîné en rotation et relié solidairement en rotation à la roue dentée (9), et l'élément de recouvrement (5) étant déplaçable par rapport à l'élément de cadre (10) et par conséquent par rapport à l'ouverture (3) à la suite d'un mouvement de rotation de la roue dentée (9) engrenée avec la crémaillère (8), **caractérisé en ce que** la crémaillère (8) présente un contour de roulement roulant sur la roue dentée (9) de telle sorte que, lors de la libération de l'ouverture (3), l'élément de recouvrement (5) plonge au-dessous de la surface supérieure (2) de l'élément d'aménagement intérieur (1) qui délimite l'ouverture (3) et **en ce que** le contour de roulement de la crémaillère (8) est formé soit
a) par une première partie de crémaillère droite (8a) qui se transforme en une deuxième partie de crémaillère (8b) incurvée et formée par un secteur d'une roue droite à denture intérieure, ou
b) par une première partie de crémaillère (8a) qui est incurvée et formée par un secteur d'une roue droite à denture intérieure et qui se transforme en une deuxième partie de crémaillère (8b) incurvée et formée par un secteur d'une roue droite à denture intérieure, le diamètre de cercle primitif de la première partie de crémaillère (8a) étant choisi pour être un multiple du diamètre de cercle primitif de la deuxième partie de crémaillère (8b).

2. Dispositif selon la revendication 1, **caractérisé en ce que** la crémaillère (8) s'étend approximativement au centre de l'élément de recouvrement (5).

3. Dispositif de libération et de fermeture d'une ouverture (3) prévue dans une surface supérieure (2) d'un élément d'aménagement intérieur (1) d'un véhicule, notamment d'un véhicule automobile, au moyen d'un élément de recouvrement déplaçable (5), l'élément de recouvrement (5) étant formé par un élément de surface présentant un côté supérieur (5a) et un côté inférieur (5b) et pouvant être transféré d'une position fermée (6a), dans laquelle l'élément de recouvrement (5) occupe ladite ouverture (3), dans une position ouverte (6b) dans laquelle l'élément de couverture (5) libère par son déplacement l'ouverture (3), et inversement, l'élément de recouvrement (5) comportant sur son côté inférieur (5b) une crémaillère (8) dirigée dans la direction de déplacement (7) de l'élément de recouvrement (5) et s'étendant approximativement au centre de l'élément de recouvrement (5), laquelle s'engrène de son côté avec une roue dentée associée (9), la roue dentée (9) étant montée à rotation sur un élément de cadre (10), relié à l'élément d'aménagement intérieur (1), par l'intermédiaire d'un arbre (11) entraîné en rotation et relié solidairement en rotation à la roue dentée (9), et l'élément de recouvrement (5) étant déplaçable par rapport à l'élément de cadre (10) et par conséquent par rapport à l'ouverture (3) à la suite d'un mouvement de rotation de la roue dentée (9) engrenée avec la crémaillère (8), **caractérisé en ce que** la crémaillère (8) présente un contour de roulement roulant sur la roue dentée (9) de telle sorte que, lors de la libération de l'ouverture (3), l'élément de recouvrement (5) plonge au-dessous de la surface supérieure (2) de l'élément d'aménagement intérieur (1) qui délimite l'ouverture (3), et **en ce que** le contour de roulement de la crémaillère (8) est formé soit
a) par une première partie de crémaillère droite (8a) qui se transforme en une deuxième partie de crémaillère (8b) incurvée et formée par un secteur d'une roue droite à denture intérieure, ou
b) par une première partie de crémaillère (8a) qui est incurvée et formée par un secteur d'une roue droite à denture intérieure et qui se transforme en une deuxième partie de crémaillère (8b) incurvée et formée par un secteur d'une roue droite à denture intérieure, le diamètre de cercle primitif de la première partie de crémaillère (8a) étant choisi pour être un multiple du diamètre de cercle primitif de la deuxième partie de crémaillère (8b).

4. Dispositif selon la revendication 3, **caractérisé en ce que** l'élément de recouvrement (5) comporte sur son côté inférieur (5b) une seule crémaillère (8).

5. Dispositif selon l'une des revendications précédentes, **caractérisé en ce que** la crémaillère (8), s'engrenant avec la roue dentée (9), est disposée dans le plan de déplacement de l'élément de recouvrement (5) sans pouvoir tourner.

6. Dispositif selon l'une des revendications précédentes, **caractérisé en ce que** les parties de crémaillère (8a, 8b) sont disposées au niveau de l'élément de recouvrement (5) de telle sorte que, dans la position fermée (6a) de l'élément de recouvrement (5), la deuxième partie de crémaillère (8b) est engrenée avec la roue dentée (9) tandis que, dans la position ouverte (6b) de l'élément de recouvrement (5), la première partie de crémaillère (8a) est engrenée avec la roue dentée (9).

7. Dispositif selon l'une des revendications précédentes, **caractérisé en ce que**, lorsque l'on regarde dans la direction de déplacement (7) de l'élément de recouvrement (5), des broches de guidage avant et arrière (13, 14, 15, 16) sont disposées des deux côtés sur l'élément de recouvrement, lesquelles broches de guidage (13 , 14, 15, 16) sont chacune guidées en force de manière coulissante dans une rainure de guidage associée (17, 18) de l'élément de cadre (10), les rainures de guidage (17, 18) étant de préférence disposées des deux côtés de l'élément de cadre (10).

8. Dispositif selon la revendication 7, **caractérisé en ce que** les rainures de guidage (17, 18) sont chacune formées par des parties de rainure de guidage avant et arrière (17a, 17b ; 18a, 18b).

9. Dispositif selon la revendication 8, **caractérisé en ce que** des parties de rainure de guidage (17a, 17b ; 18a, 18b), disposées des deux côtés de l'élément de cadre (10), ont une allure telle que, à partir de la position fermée (6a) de l'élément de recouvrement (5), ce dernier est incliné au cours du processus d'ouverture tout d'abord, du côté de la roue dentée, d'un angle « α » en direction de la roue dentée (9) et est guidé obliquement en direction de la roue dentée (9) et finalement est déplacé le long d'une ligne droite ou d'une ligne à peu près droite.

10. Dispositif selon l'une des revendications précédentes, **caractérisé en ce que** l'élément d'aménagement intérieur (1) est un tableau de bord du véhicule.

11. Dispositif selon l'une des revendications précédentes destiné à recouvrir un affichage tête haute.
